# EUROPEAN PATENT SPECIFICATION

(11) **EP 3 324 816 B1**
(45) Date of publication and mention of the grant of the patent: **11.09.2019**
(21) Application number: 16741279.0
(22) Date of filing: 14.07.2016
(51) Int. Cl.: A47L 17/00, C09D 183/02, C09D 183/04, C08G 77/02, C08G 77/04

(54) **HOUSEHOLD APPLIANCE COMPONENT COMPRISING A BASE ELEMENT WITH A FUNCTIONAL COATING**
HAUSGERÄTEKOMPONENTE MIT BAUTEIL FUNKTIONELLE BESCHICHTUNG
ÉLÉMENT D'APPAREIL MÉNAGER COMPRENANT UN ÉLÉMENT AVEC REVÊTEMENT FONCTIONEL

(30) Priority: 20.07.2015 ES 201531061
(43) Date of publication of application: 30.05.2018
(73) Proprietor: BSH Hausgeräte GmbH, 81739 München (DE)
(72) Inventor: ARTAL LAHOZ, Maria Carmen, 50007 Zaragoza (ES); BAYINDIR, Mehmet, Ankara (TR); BUNUEL MAGDALENA, Miguel Angel, 50017 Zaragoza (ES); CASTRO LAPETRA, Cristina, Zaragoza (ES); DAGLAR, Bihter, Ankara (TR); DISPINAR, Tugba, 34515 Istanbul (TR); MARTINEZ SOLANAS, Elena, 50015 Zaragoza (ES); SANZ NAVAL, Javier, 50193 Zaragoza (ES); YILDIRIM, Adem, 06800 Ankara (TR); YÜCEL, Murat, 59850 Tekirdag (TR); ÖKSÜZ, Dilara, Ankara (TR)
(86) International application number: PCT/EP2016/066733
(87) International publication number: WO 2017/012968

(56) References cited:
- WO-A1-00/59555
- WO-A1-2005/014745
- US-A1- 2009 238 986
- US-A1- 2010 242 799
- US-A1- 2015 030 833

## Description

The invention relates to a household appliance component comprising a base element, wherein at least one surface of the base element is at least partly coated with a functional coating. The invention further relates to a method for coating a household appliance component and a household appliance.

Energy efficiency and cleanability are topics of increasing importance in all household appliances. In particular the drying performance is a key factor and consists of the removal of water present in the household appliance because of condensation of water onto different components of the household appliance during the use of the household appliance. Household appliance components usually comprise a base element, wherein at least one surface of the base element is at least partly coated with a functional coating to reduce or foster the condensation of water and to ameliorate the cleanability of the household appliance. Condensation related problems, which are described as "sweating" by customers, are for example present in household refrigerators. This problem has various reasons, such as storing goods without a lid. Especially in humid regions of a refrigerator, condensed water droplets may form and drip onto food, thus causing shorter shelf lives. Condensation of water droplets on the surface of components like linings and inner walls may also affect the performance of a refrigerator. In dishwashers complaints focus on water stains which are formed on the dishes after the washing process. In contrast, a low wettability may impair the cleanability of household appliances like cooktops. However, currently known functional coatings still exhibit a rather low performance with regard to avoiding such condensation related problems in household appliances.

The publication WO 00/59555 A1 describes household appliances with a catalytic composition for desodorization and oxidation purposes, comprising a coating mass on a substrate which is obtainable by applying the coating mass, which comprises (a) a polycondensate made of at least one hydrolyzable silane of the formula (I), Rₐ-SiX₍₄₋ₐ₎ (I), wherein the residues R are identical or different and are hydrolyzable groups or hydroxyl groups and a has a value 0, 1, 2 or 3, whereby for at least 50 % of the amount of silanes a is larger than 0, or from an oligomer derived therefrom and optionally one or more compounds of glass-forming elements and (b) particles of one or more transition metal oxides, the weight ratio of transition metal oxide particles to polycondensate being 10:1 to 1:10, to the substrate and heat-treating the applied coating mass, whereby this catalytic composition is a constituent part of the domestic appliance or a device connected to the domestic appliance. In a preferred embodiment, the silanes are a mixture that contains at least one organosilane. Particularly preferred hydrolyzable silanes are tetraalkoxysilanes. For the manufacture of the polycondensate the starting materials are hydrolyzed and condensed. The coating mass is applied to a substrate in a conventional manner including spray-coating whereby numerous suitable substrates can be used. As a substrate any surface of a respective household appliance can be used.

The publication US 2015/0030833 A1 describes a method of producing a hydrophobic or superhydrophobic solution, the method comprising: forming branched polysilicate structures comprising surface hydroxyl groups; dispersing the branched polysilicate structures, thereby forming a colloidal suspension; and reacting a silylating agent with the hydroxyl groups. An improved method for preparing a superhydrophobic coating solution comprises providing a dispersed hydrophilic polysilicate gel, which is preferably prepared using at least one alkoxy silane precursor that has been either fully or partially hydrolyzed via water and an acid catalyst in an alcohol, diluted in additional alcohol after the hydrolysis step, and catalyzed with a base to form a gel; reacting the dispersed hydrophilic gel with a silylating agent to impart hydrophobic ligands; and finally adding additional solvents to allow ease of coating for a variety of substrates. The alkoxy silane precursor may comprise one or more silane compounds including, but not limited to methyltrimethoxy silane. In some embodiments, the resulting suspended polysilicate gel can be dispersed in its reacted form or in additional solvent by means of high power sonication whereby the resulting dispersion is a colloidal suspension of the polysilicate structures formed in the base-catalyzed gelation reaction step. An exemplary superhydrophobic surface can include a superhydrophobic coating having a water contact angle of at least about 150° and the pore size is preferably in the range from approximately 5 nm to 1 micron. Any suitable material can be used for as a substrate component for the superhydrophobic coating such as, for example, skin, hair, teeth, plant matter, cloth, fabric, glass, ceramics, polymers, metals or combinations thereof and the like. The use of the coatings in household appliances or household appliance components is not disclosed.

The publication WO 2005/014745 A1 describes according to claim 1 a cationically polymerizable composite coating composition comprising a) a condensation product of at least one hydrolysable silane having a fluorine-containing group, b) at least one cationically polymerizable organic resin, and c) a cationic initiator. A substrate having a cured composite coating composition is selected from a metal, glass, ceramic or plastic substrate, which may be pretreated or pre-coated. The cured coating composition comprises an organically modified siloxane framework (inorganic framework) formed from the hydrolysable silanes and an organic framework formed by the cationically polymerized resin which is linked by ether bonds, if epoxy groups are used. Preferred hydrolysable silanes have a substituent Rf, wherein Rf is a non-hydrolysable substituent having 1 to 30 fluorine atoms bonded to carbon atoms. The use inter alia for household equipment and parts thereof is disclosed.

The publication US 2009/238986 A1 describes an alkali-resistant coating, wherein the coating consists of a hydrolysable silane of the compounds TEOS, MTEOS or higher-chain alkyl silanes (di- tri- and tetrafunctional silanes), but preferably TEOS, MTEOS or mixtures thereof and a condensation catalyst based on a) secondary or tertiary bases and/or b) Lewis acids whereby the ratio of hydrolysable silane to condensation catalyst is between 99:1 and 70/30. The coating is applied by way of roll coating, flooding, spray painting, electrostatic spraying, centrifugal coating, dip coating or wipe coating. Numerous substrate materials are disclosed. The coating is used on household crockery, household appliances, textiles and kitchen and sanitary equipment.

The publication US 2010/0242799 A1 describes a non-adhesive coating composition, comprising inter alia 100 parts by weight of silica sole, 5-60 parts by weight of hexagonal boron nitride, 60 to 120 parts by weight of alkoxysilane. Preferably the alkoxysilane is one or more selected from among methyltrimethoxysilane, tetramethoxysilance, trimethylethoxysilane and tetraethoxysilane. The coatings are suggested to be used in kitchen utensils. Mixtures obtained after the addition of alkoxysilane are stirred at a temperature of 20-30°C for 2-15 hours to age the mixture.

It is the task of the present invention to provide a household appliance component with better condensation properties of water. A further task of the invention consists in providing a method for coating a household appliance component with a coating having better condensation properties. Still further, it is an object of the current invention to provide a household appliance comprising at least one household appliance component with better condensation properties.

These tasks are solved by a household appliance component, a method for coating a household appliance component, and a household appliance according to the independent claims. Advantageous developments of the invention are specified in the respective dependent claims, wherein advantageous developments of the household appliance component are to be regarded as advantageous developments of the method and the household appliance and vice versa.

A first aspect of the invention relates to a household appliance component comprising a base element, wherein at least one surface of the base element is at least partly coated with a functional coating and wherein the coating has been brought into contact with an organic solvent. According to the invention, ameliorated condensation properties of the household appliance component are achieved in that the coating comprises at least one organically modified silicate (Ormosil). Organically modified silicate coatings show unique properties, standing between organic polymers and silica. They can be resistant against atmospheric conditions like silicas and flexible like polymers. They are not as brittle as silica coatings thanks to their flexibility and are very important for production of durable coatings due to their exceptional mechanical properties. Another feature of Ormosil coatings is their good adherence to many different materials. Thus, they can be coated on various surfaces such as plastic materials (e.g. polystyrene or polypropylene), metals, glasses, silicon, paper, cardboard, stones, and wood without an additional binder. Ormosils may have very high water repellence and thus effectively prevent the condensation of water on the coated areas of the base element, for example on walls of a refrigerator. This enhancement of the condensation properties leads to a reduction of the temperature required for drying of household appliances like dryers, washing machines, and dishwashers as well as to a reduction of the time required for the drying process. Thus, the energy consumption required for carrying out such a drying process as for example in dishwashers and dryers is reduced. Alternatively or additionally Ormosils may have a very high water affinity and thus effectively prevent the condensation of water on uncoated areas, for example on dishes within a dishwasher. Thus, the coating effectively repels hydrophobic components like oil and food residue, thereby simplifying the cleaning process of different household appliance components. The wettability or non-wettability of such coated surfaces is generally not affected by the material of the underlying substrate or the pH of the water. Further, Ormosil coatings are durable and stable, both mechanically and chemically. The coating of the base element generally may consist of one or more Ormosils. The coating may also comprise one or more additional components. The surface of the base element may be coated only partly. Further, the entire surface of the base element may be coated. Still further, the base element may comprise different coatings on different surface areas, wherein at least one of the coatings comprises or consists of at least one organically modified silicate (Ormosil).

In an advantageous development of the invention, it is provided that the at least one Ormosil is superhydrophobic. In that at least one Ormosil is superhydrophobic, condensation of water on the coating can be reduced or even completely avoided. According to the present invention, the term "superhydrophobic" relates to Ormosils having water contact angles of at least 120° and preferably of 140° or more.. The superhydrophilic behavior is achieved by Polydopamine (PDA) based coatings. PDA may act as a sink or catcher for water, thereby aiding in removing water from other less hydrophilic surfaces of the household appliance component. The term "superhydrophilic" within the scope of the present invention is generally understood to relate to Ormosils having water contact angles of less than 40° and preferably of 30° or less.

In a further advantageous development of the invention, it is provided that the coating is arranged in one layer or in multiple layers. This allows for a precise tuning of the coating's mechanical and chemical properties.

In a further advantageous development of the invention, it is provided that the coating comprises cavities, in particular nano and/or micro sized cavities. This nano-/microstructured topography offers the advantage of improved thermal stability and improved mechanical properties.

In a further advantageous development of the invention it is provided that the household appliance component is configured as a lining or wall element of a household appliance. This allows for avoidance and/or improvement of water contact to such inner and/or outer walls of household appliance surfaces. Alternatively or additionally it is provided that the household appliance component is configured as a cooktop, in particular as a cooktop of at least one induction hob. In case of cooktops like induction hobs, ceramic glass cooktops a coating on the glass of induction hob reduces the adherence of oil and food residue, thereby simplifying the cleaning process of such cooktops giving them an easy cleaning property. Alternatively or additionally it is provided that the household appliance component is configured as a rack or basket of a dishwasher. In dishwashers, the customer complaints focus on the water stains which form on the dishes after a washing process. Formation of such stains might mainly be related to water hardness. To eliminate these water stains, coating of a rack and/or basket of the dishwasher may assist in binding water droplets on the rack/basket since the water droplets settle more on coated rack or basket and less on common materials of dishes (glass, steel, ceramic).

A further aspect of the invention relates to a method for coating a household appliance component, in which at least one surface of a base element of the household appliance component is at least partly coated with at least one organically modified silicate (Ormosil) and wherein the coating is brought into contact with an organic solvent. Ormosils may have very high water repellence and thus effectively prevent the condensation of water on the coated areas of the base element, for example on walls of a refrigerator. This enhancement of the condensation properties leads to a reduction of the temperature required for drying of household appliances like dryers, washing machines, and dishwashers as well as to a reduction of the time required for the drying process. Thus, the energy consumption required for carrying out such a drying process as for example in dishwashers and dryers is reduced. Alternatively or additionally, Ormosils may have a very high water affinity and thus effectively prevent the condensation of water on uncoated areas, for example on dishes within a dishwasher. Thus, the coating effectively repels hydrophobic components like oil and food residue, thereby simplifying the cleaning process of different household appliance components. Furthermore, Ormosils can be directly coated on any material that is commonly used for the surface of base elements of household appliance components, for example on plastic materials (e.g. polystyrene or polypropylene), metals, glass, silicon, paper, cardboard, and stones. The wettability or non-wettability of such coated surfaces is generally not affected by the material of the underlying substrate or the pH of the water. Further, Ormosil coatings are durable and stable, both mechanically and chemically. The coating of the base element generally may consist of one or more Ormosils. The at least one surface of a base element may be coated with a composition that comprises Ormosil together with one or more additional components. The surface of the base element may be coated only partly. Alternatively, the entire surface of the base element may be coated. Still further, the base element may be coated with different coatings on different surface areas, wherein at least on of the coatings comprises or consist of at least one organically modified silicate (Ormosil).

In an advantageous development of the invention, it is provided that the at least one Ormosil is spray-coated onto the base element. In other words, it is provided that at least one section of a surface of the household appliance component is coated with the at least one Ormosil by a spray-coating process. Coatings generated by spray-coating exhibit excellent mechanical and chemical properties and are easy to apply to all commonly used base materials and shapes. Spray-coating further allows for low production costs.

In a further advantageous development of the invention, it is provided that the at least one Ormosil is first mixed with at least one plastic material and/or with at least one solvent, and wherein the mixture is subsequently spray-coated onto the at least one surface. Coatings must be mechanically stable and need to securely adhere to the base element during the lifetime of the household appliance component. Ormosil(s) may thus be mixed with plastic materials like granular polystyrene which functions as a binder. Alternatively or additionally, Ormosil(s) may be mixed with one or more solvents like ethanol and/or tetrahydrofuran to ease the coating of the base element for example by spray-coating.

In a further advantageous development of the invention, it is provided that the at least one employed Ormosil is synthesized via a sol-gel process. The sol-gel process is a method for producing solid materials from small molecules and involves conversion of monomers into a colloidal solution (sol) that acts as the precursor for an integrated network (or gel) of either discrete particles or network polymers. In this chemical procedure, the 'sol' (or solution) gradually evolves towards the formation of a gel-like diphasic system containing both a liquid phase and solid phase whose morphologies range from discrete particles to continuous polymer networks. Gels according to the present invention may for example be produced by using methyltrimethoxysilane (MTMS) and phenyltrimethoxysilane (PhTES) for superhydrophobic coatings and/or by using tetraethylorthosilicate for superhydrophilic coatings. Of course, different monomers and/or monomer mixtures may equally be used. The respective monomers may be dissolved in a solvent like ethanol and hydrolyzed at room temperature with an acidic catalyst (e. g. oxalic acid). The resulting compounds may then be polymerized using an alkaline catalyst (e. g. ammonium hydroxide), thereby forming a gel.

In a further advantageous development of the invention, it is provided that the formed Ormosil gel is aged for a predetermined period at a predetermined temperature before coating the at least one surface of the household appliance component. Aging leads to a change in the physical and chemical properties of the Ormosil gel. The aging process can be speeded up or slowed down by physical and/or chemical influences like lowered or increased temperature and/or pressure, oxygen, inert gas, moisture, light, ultraviolet radiation and the like. Formed Ormosil containing gels may for example be aged at room temperature for 1 to 3 days to improve their mechanical and chemical properties.

In a further advantageous development of the invention, vibrations in the ultrasonic regime are applied to the at least one Ormosil before coating the at least one surface of the household appliance component. Due to cavitational shear forces by the application of ultrasound vibrations, the molecular weight of the Ormosil(s) is/are lowered by particle size reduction, resulting in a polydisperse colloidal solution. Multiphase systems are dispersed and emulsified very efficiently, so that very fine mixtures are prepared. The resulting "Sono-Ormosil(s)" exhibit a higher density as well as an improved thermal stability compared to Ormosils that were produced without the application of vibrations in the ultrasonic regime.

In the present invention, it is provided that the coating is brought into contact with an organic solvent. This improves the adhesion of the Ormosil containing coating on the surface of the base element. The coating may for example be dipped for a few seconds in an organic solvent like acetone. Alternatively or additionally, the organic solvent may be sprayed onto the coating.

A third aspect of the invention relates to a household appliance comprising at least one household appliance component according to the first aspect of the invention and/or at least one household appliance component, which is at least partly coated by a method according to the second aspect of the invention. The household appliance is provided with tailor-made Ormosil containing coatings and thus with controlled wettability and/or non-wettability. Further features and their advantages can be gathered from the description of the first and second aspect of the invention.

Further features of the invention appear from the claims as well as based on the following embodiments. The features and feature combinations mentioned above in the description as well as the features and feature combinations mentioned below in the embodiments are usable not only in the respective specified combination, but also in other combinations without departing from the scope of the invention. There are thus also variations of the invention possible that are not explicitly shown and described in the embodiments but can, however, be formulated through different combinations of separated features from the described embodiments. In the following, embodiments of the invention are shown in more detail by referring to schematic drawings. These show in:
- Fig. 1: a regular household appliance component without coating after 10 minutes of water treatment; and
- Fig. 2: a household appliance component according to the invention after 10 minutes of water treatment.

### 1. Synthesis of Ormosil Gels

Ormosil gels with nanosized cavities that may be employed in the context of the present invention are obtained by a sol-gel method. Gels are formed by using methyltrimethoxysilane (MTMS) and phenyltrimethoxysilane (PhTES) for superhydrophobic coatings or by using tetraethylorthosilicate for superhydrophilic coatings. The respective monomer(s) is/are dissolved in ethanol (a safe solvent to use) and hydrolyzed at room temperature with an acidic catalyst (oxalic acid). The resulting compounds are then polymerized at room temperature using an alkaline catalyst (ammonium hydroxide) thereby forming a gel.

### 2. Preparation of Ormosil Colloids

The thus formed gels are aged at room temperature for 1 to 3 days. The aged gels are diluted with ethanol and then broken up by sonification using ultrasonic vibrations which results in a colloidal solution. The ultrasonic vibrations can be produced by an ultrasonic bath or an ultrasonic probe.

### 3. Preparation and Characterization of the Coatings

Organically modified silicate coatings show unique properties, standing between organic polymers and silica. They are resistant against atmospheric conditions like silicas and flexible like polymers. They are not as brittle as silica coatings thanks to their flexibility and are ideal for the production of durable coatings due to their exceptional mechanical and chemical properties. Another feature of Ormosil coatings is their good adherence to many different surfaces. Thus, they can be coated on various surfaces such as plastics, metals, glasses or wood, without an additional binder.

Coatings must generally be mechanically stable in order to securely adhere to the respective base element. Ormosil gels, that are prepared according to the above-described method, are mixed with granular polystyrene and tetrahydrofuran and then applied onto a household appliance component using spray-coating. The household appliance component may be an inner liner for a refrigerator and comprise a base element made of polystyrene or another suitable plastic material. The coated household appliance component is then dipped into acetone to improve the adhesion of the Ormosil containing coating. After these steps, several tests are conducted to examine the adhesion and mechanical properties of the coating.

### 3.1. Examination of Adhesion and Mechanical Properties of the Coatings

### • Band Test:

Adhesion properties are examined using a band. In this test, the band is applied onto the surface of the household appliance component with a specified pressure. The properties of the coating are examined after the band is removed.

### • Scratch Test:

The coating's durability against scratches is tested by using a metal stick. The effect of the scratching is examined by measuring the water contact angle in the area where the stick was used to scratch the coating.

### • Abrasion Test:

This test is used to determine the coating's durability against wiping and pressure. A test apparatus, weighing 120 grams, is wrapped in a damp cloth and moved on the surface of the coating with a predetermined speed and time. After the test, the properties and morphology of the coating are examined.

### • Chemical Stability Test:

To test the coating's stability against aggressive chemicals, various solutions with different concentrations are prepared and applied onto the coating. The solutions are designed to mimic the chemical properties of common foods such as vinegar, lemon or milk etc. Also, to test the durability against commonly used cleaners, compounds like dishwashing soap, fat solvent and caustic soda were used for testing. The water contact angles within the areas of the coating that were subjected to these solutions are measured to determine the chemical stability.

### 4. Testing of Anti-Condensation Properties:

To examine the anti-condensation property of a superhydrophobic coating, the coated household appliance component is treated with water vapour for a predetermined time (e. g. 10 minutes). Afterwards, the amount of water that remains on the coating is measured. Also, the performance of the coating is determined by measuring water contact angles if there are any remaining droplets.

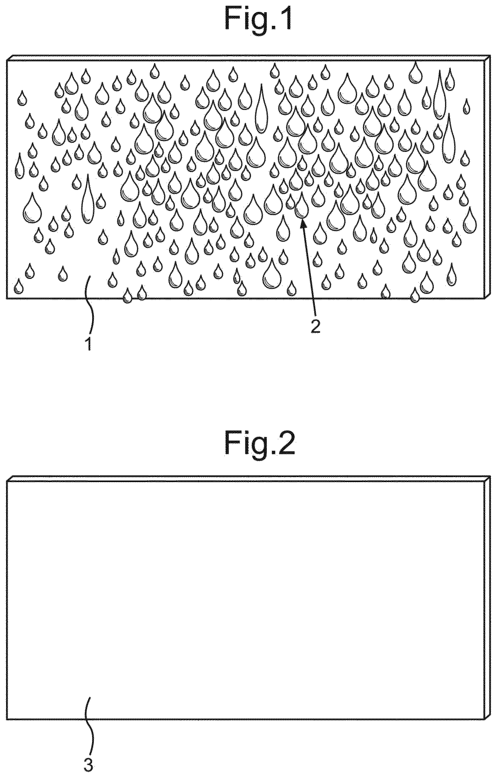

Fig. 1 shows a regular household appliance component 1 without any coating after 10 minutes of water treatment. The household appliance component 1 is made of polystyrene and is completely covered with water drops 2.

Fig. 2 shows a household appliance component 3 according to the invention. The household appliance component 3 comprises a base element made of polystyrene which is entirely coated with a superhydrophobic Ormosil (MTMS-PhTES) containing coating. Even after 10 minutes of water treatment, no water drops 2 adhere to the coating. Condensation problems in household refrigerators, which are described as "sweating" by customers, can thus be completely avoided. Especially in humid regions of the refrigerator, no water droplets 2 can form on the surface of the coated household appliance component 3.

In dishwashers, the customer complaints focus on the water stains which form on the dishes after washing process. To eliminate these water stains household appliance components like polypropylene racks and baskets comprising superhydrophilic PDA-coatings can be used. Thereby water droplets are formed on the superhydrophilic PDA-coating rather than on the less hydrophilic material of dishes (glass, steel, ceramic,

In case of induction hobs or other cooktops, a superhydrophilic coating on the covering glass of the cooktop simplifies the cleaning process.

It will be understood by those skilled in the art that while the present invention has been disclosed above with reference to preferred embodiments, various modifications, changes and additions can be made to the foregoing invention, without departing from the scope thereof. The parameter values used in the claims and the description for defining process and measurement conditions for the characterization of specific properties of the invention are also encompassed within the scope of deviations, for example due to measurement errors, system errors, weighing errors, DIN tolerances.

## Claims

1. A household appliance component (3) comprising a base element, wherein at least one surface of the base element is at least partly coated with a functional coating, and wherein the coating comprises at least one organically modified silicate (Ormosil), **characterized in that** the coating has been brought into contact with an organic solvent.

2. The household appliance component (3) according to claim 1, wherein the at least one Ormosil is superhydrophobic.

3. The household appliance component (3) according to claim 1 or 2, wherein the coating is arranged in one layer or in multiple layers.

4. The household appliance component (3) according to any one of claims 1 to 3, wherein the coating comprises cavities, in particular nano and/or micro sized cavities.

5. The household appliance component (3) according to any one of claims 1 to 4, which is configured as a lining or wall element of a household appliance or as a cooktop or as a rack or basket of a dishwasher.

6. A method for coating a household appliance component (3), wherein at least one surface of a base element of the household appliance component (3) is at least partly coated with at least one organically modified silicate (Ormosil), **characterized in that** the coating is brought into contact with an organic solvent.

7. The method of claim 6, wherein the at least one Ormosil is spray-coated onto the base element.

8. The method of claim 7, wherein the at least one Ormosil is first mixed with at least one plastic material and/or with at least one solvent, and wherein the mixture is subsequently spray-coated onto the at least one surface.

9. The method of any one of claims 6 to 8, wherein the at least one employed Ormosil is synthesized via a sol-gel process.

10. The method of claim 9, wherein the formed Ormosil gel is aged for a predetermined period at a predetermined temperature before coating the least one surface of the household appliance component (3).

11. The method of any one of claims 6 to 10, wherein vibrations in the ultrasonic regime are applied to the at least one Ormosil before coating the least one surface of the household appliance component (3).

12. A household appliance comprising at least one household appliance component (3) according to any one of claims 1 to 5 and/or at least one household appliance component (3), which is at least partly coated by a method according to any one of claims 6 to 11.

## Patentansprüche

1. Haushaltsgerätebauteil (3) mit einem Grundelement, wobei mindestens eine Oberfläche des Grundelements zumindest teilweise mit einer funktionellen Beschichtung beschichtet ist und die Beschichtung mindestens ein organisch modifiziertes Silikat (Ormosil) umfasst, **dadurch gekennzeichnet, dass** die Beschichtung mit einem organischen Lösungsmittel in Kontakt gebracht wurde.

2. Haushaltsgerätebauteil (3) nach Anspruch 1, wobei das mindestens eine Ormosil superhydrophob ist.

3. Haushaltsgerätebauteil (3) nach Anspruch 1 oder 2, wobei die Beschichtung in einer Schicht oder in mehreren Schichten angeordnet ist.

4. Haushaltsgerätebauteil (3) nach einem der Ansprüche 1 bis 3, wobei die Beschichtung Hohlräume, insbesondere nano- und/oder mikroskalige Hohlräume, umfasst.

5. Haushaltsgerätebauteil (3) nach einem der Ansprüche 1 bis 4, das als Auskleidungs- oder Wandelement eines Haushaltsgeräts oder als Herdplatte oder als Ablage oder Korb eines Geschirrspülers konfiguriert ist.

6. Verfahren zum Beschichten eines Haushaltsgerätebauteils (3), wobei mindestens eine Oberfläche eines Grundelements des Haushaltsgerätebauteils (3) zumindest teilweise mit mindestens einem organisch modifizierten Silikat (Ormosil) beschichtet ist, **dadurch gekennzeichnet, dass** die Beschichtung mit einem organischen Lösungsmittel in Kontakt gebracht wird.

7. Verfahren nach Anspruch 6, wobei das mindestens eine Ormosil auf das Grundelement aufgespritzt wird.

8. Verfahren nach Anspruch 7, wobei das mindestens eine Ormosil zuerst mit mindestens einem Kunststoffmaterial und/oder mindestens einem Lösungsmittel vermischt wird und das Gemisch danach auf die mindestens eine Oberfläche aufgespritzt wird.

9. Verfahren nach einem der Ansprüche 6 bis 8, wobei das mindestens eine eingesetzte Ormosil über einen Sol-Gel-Prozess synthetisiert wird.

10. Verfahren nach Anspruch 9, wobei das gebildete Ormosilgel vor dem Beschichten der mindestens einen Oberfläche des Haushaltsgerätebauteils (3) für einen vorgegebenen Zeitraum bei einer vorgegebenen Temperatur gealtert wird.

11. Verfahren nach einem der Ansprüche 6 bis 10, wobei vor dem Beschichten der mindestens einen Oberfläche des Haushaltsgerätebauteils (3) Vibrationen im Ultraschallbereich an das mindestens eine Ormosil angelegt werden.

12. Haushaltsgerät mit mindestens einem Haushaltsgerätebauteil (3) nach einem der Ansprüche 1 bis 5 und/oder mindestens einem Haushaltsgerätebauteil (3), das zumindest teilweise über ein Verfahren nach einem der Ansprüche 6 bis 11 beschichtet wurde.

## Revendications

1. Composant d'appareil électroménager (3) comprenant un élément de base, où au moins une surface de l'élément de base est au moins partiellement revêtue d'un revêtement fonctionnel, et où le revêtement comprend au moins un silicate organiquement modifié (Ormosil), **caractérisé en ce que** le revêtement a été mis en contact avec un solvant organique.

2. Composant d'appareil électroménager (3) selon la revendication 1, dans lequel l'au moins un Ormosil est superhydrophobe.

3. Composant d'appareil électroménager (3) selon la revendication 1 ou 2, dans lequel le revêtement est agencé en une couche ou en plusieurs couches.

4. Composant d'appareil électroménager (3) selon l'une quelconque des revendications 1 à 3, dans lequel le revêtement comprend des cavités, en particulier des cavités de taille nanométrique et/ou micrométrique.

5. Composant d'appareil électroménager (3) selon l'une quelconque des revendications 1 à 4, qui est configuré comme un élément de garnissage ou de paroi d'un appareil électroménager ou comme une table de cuisson ou comme une étagère ou un panier d'un lave-vaisselle.

6. Procédé de revêtement d'un composant d'appareil électroménager (3), dans lequel au moins une surface d'un élément de base du composant d'appareil électroménager (3) est au moins partiellement revêtue d'au moins un silicate organiquement modifié (Ormosil), **caractérisé en ce que** le revêtement est mis en contact avec un solvant organique.

7. Procédé de la revendication 6, dans lequel l'au moins un Ormosil est appliqué par pulvérisation sur l'élément de base.

8. Procédé de la revendication 7, dans lequel l'au moins un Ormosil est d'abord mélangé avec au moins un matériau plastique et/ou avec au moins un solvant, et dans lequel le mélange est ensuite appliqué par pulvérisation sur l'au moins une surface.

9. Procédé de l'une quelconque des revendications 6 à 8, dans lequel l'au moins un Ormosil utilisé est synthétisé par un procédé sol-gel.

10. Procédé de la revendication 9, dans lequel on fait vieillir le gel d'Ormosil formé pendant une période prédéterminée à une température prédéterminée avant le revêtement de l'au moins une surface du composant d'appareil électroménager (3).

11. Procédé de l'une quelconque des revendications 6 à 10, dans lequel des vibrations dans le régime ultrasonore sont appliquées à l'au moins un Ormosil avant le revêtement de l'au moins une surface du composant d'appareil électroménager (3).

12. Appareil électroménager comprenant au moins un composant d'appareil électroménager (3) selon l'une quelconque des revendications 1 à 5 et/ou au moins un composant d'appareil électroménager (3), qui est au moins partiellement revêtu par un procédé selon l'une quelconque des revendications 6 à 11.
